# EUROPÄISCHE PATENTSCHRIFT

(11) **EP 1 566 776 B1**
(45) Veröffentlichungstag und Bekanntmachung des Hinweises auf die Patenterteilung: **19.01.2011**
(21) Anmeldenummer: 05003236.6
(22) Anmeldetag: 16.02.2005
(51) Int. Cl.: G07F 7/10

(54) **Verfahren zum sicheren Betrieb eines tragbaren Datenträgers**
Method for securely operating a portable data carrier
Procédé d'exploitation sécurisée d'un support de données portable

(30) Priorität: 19.02.2004 DE 102004008179
(43) Veröffentlichungstag der Anmeldung: 24.08.2005
(73) Patentinhaber: Giesecke & Devrient GmbH, 81677 München (DE)
(72) Erfinder: Baldischweiler, Michael, 81825 München (DE); Bockes, Markus, Dr., 81927 München (DE); Drexler, Hermann, Dr., 81371 München (DE); Kahl, Helmut, Dr., 80992 München (DE); Karch, Torsten, 88085 Langenargen (DE); Lamla, Michael, 80638 München (DE); Mamuzic, Nikola, 81829 München (DE); Seysen, Martin, Dr., 80809 München (DE); Vater, Harald, Dr., 35398 Giessen (DE); Weicker, Sabine, 80469 München (DE)
(74) Vertreter: Klunker . Schmitt-Nilson . Hirsch

(56) Entgegenhaltungen:
- EP-A- 0 609 156
- WO-A-02/45035
- US-A- 5 477 039
- US-A1- 2003 101 351
- US-A1- 2003 188 170

## Beschreibung

Die Erfindung betrifft ein Verfahren zum sicheren Betrieb eines tragbaren Datenträgers. Weiterhin betrifft die Erfindung einen tragbaren Datenträger.

Bei vielen Einsatzgebieten von tragbaren Datenträgern, wie beispielsweise im Bereich des Zahlungsverkehrs oder bei Zugangskontrollen usw., ist es von vitaler Bedeutung für das jeweilige System, dass der Zustand des tragbaren Datenträgers nicht manipuliert werden kann und im tragbaren Datenträger vorhandene geheime Daten nicht ausgespäht werden können. Besonders kritische Änderungen des Zustands des tragbaren Datenträgers sind beispielsweise eine Änderung der Zugriffsrechte von Dateien im Speicher des tragbaren Datenträgers oder eine Änderung des Ergebnisses, das der tragbare Datenträger bei der Prüfung eines eingegebenen Wertes für eine persönliche Geheimzahl ermittelt hat. Als geheime Daten können im tragbaren Datenträger beispielsweise ein geheimer Schlüssel, eine persönliche Geheimzahl, ein persönlicher Geheimcode zum Zurücksetzen des tragbaren Datenträgers nach dessen Sperrung usw. abgelegt sein. Potentielle Angriffe können auf das Timing des tragbaren Datenträgers abzielen oder versuchen, den tragbaren Datenträger zum Beispiel durch Lichteinwirkung oder eine kurzzeitige Erhöhung oder Absenkung der Betriebsspannung oder andere physikalische Einflüsse zu beeinflussen. Da nicht verhindert werden kann, dass ein tragbarer Datenträger in den physischen Einflussbereich eines Angreifers gelangt, ist es wichtig, den tragbaren Datenträger möglichst angriffssicher auszubilden.

WO 02/45035 A2 offenbart ein Verfahren zur Verifizierung der Integrität von vertraulichen Daten bei der Datenverarbeitung in elektronischen Geräten. Das Verfahren besteht aus einem gleichzeitigen Berechnen eines Wertes der gesamten Steuerung, während die vertraulichen Daten verarbeitet werden. Die vertraulichen Daten werden in Sätze von Oktetten aufgeteilt und werden Oktett für Oktett verarbeitet und verifiziert. Ein Beispiel für die Anwendungen des Verfahrens umfaßt das Übertragen von Daten von einem EEPROM einer Smartcard in ihr RAM und die Validierung eines geheimen Codes in der Karte.

US 2003/0188170 A1 bezieht sich auf ein Verfahren, das darauf gerichtet ist, Manipulationen eines geheimen Codes in einer Datenverarbeitungsvorrichtung, wie z.B. einer Smartcard, zu verhindern, indem ein vorgestellter Code verwendet wird. Das Verfahren zur Verwendung einer Funktionalität der Karte umfaßt vor der Implementierung eines Codes die Übertragung einer Funktion in die Verarbeitungsmittel und die Transformation des geheimen Codes in einen transformierten geheimen Code in der Karte. Für jede Verwendung der Karte werden eine Transformation und ein Vergleich des transformierten geheimen Codes mit dem transformierten geheimen Code in der Karte zur Verfügung gestellt.

Es ist daher Aufgabe der Erfindung, den Betrieb eines tragbaren Datenträgers möglichst sicher zu gestalten.

Diese Aufgabe wird durch ein Verfahren mit der Merkmalskombination des Anspruchs 1 gelöst.

Das erfindungsgemäße Verfahren bezieht sich auf den sicheren Betrieb eines tragbaren Datenträgers, der einen Speicher aufweist, in dem wenigstens eine Dateneinheit und Informationen, die den Zugriff auf die Dateneinheit regeln, abgelegt sind. Im Rahmen des erfindungsgemäßen Verfahrens werden nur Zugriffe auf die Dateneinheit zugelassen die mit den Zugriffsinformationen für diese Dateneinheit verträglich sind. Die Besonderheit des erfindungsgemäßen Verfahrens besteht darin, dass vor der Gewährung eines Zugriffs auf die Dateneinheit jeweils geprüft wird, ob die Zugriffsinformationen und/oder die Verarbeitung der Zugriffsinformationen für diese Dateneinheit manipuliert wurden.

Die Erfindung hat den Vorteil, dass unberechtigte Zugriffe auf Dateneinheiten des tragbaren Datenträgers auch dann verhindert werden können, wenn der tragbare Datenträger Störeinwirkungen ausgesetzt wird. Dadurch kann ein Ausspähen geheimer Daten des tragbaren Datenträgers verhindert oder zumindest extrem erschwert werden.

Bei einem bevorzugten Ausführungsbeispiel der Erfindung wird beim Anlegen der Dateneinheit ein Prüfwert hinterlegt. Der Prüfwert kann von den Zugriffsinformationen und von einer die Dateneinheit charakterisierende Größe abhängen. Insbesondere kann der Prüfwert von den Zugriffsinformationen und vom Inhalt der Dateneinheit abhängen. Auf diese Weise wird eine Verknüpfung zwischen den Zugriffsinformationen und dem zu schützenden Inhalt der Dateneinheit hergestellt, so dass eine Manipulation der Zugriffsinformation leicht ermittelt werden kann. Vorzugsweise stellt der Prüfwert eine Prüfsumme dar, da diese mit wenig Aufwand und schnell berechnet werden kann.

Weiterhin kann beim erfindungsgemäßen Verfahren so vorgegangen werden, dass vor der Gewährung eines Zugriffs auf die Dateneinheit jeweils ein neuer Prüfwert gebildet wird und mit dem hinterlegten Prüfwert verglichen wird. Die Auswertung der Prüfwerte kann dabei so ausgestaltet werden, dass ein Zugriff auf die Dateneinheit nur dann gewährt wird, wenn der neue Prüfwert und der hinterlegte Prüfwert übereinstimmen.

Eine weitere Maßnahme zum Schutz des tragbaren Datenträgers kann darin bestehen, dass vor der Gewährung eines Zugriffs auf die Dateneinheit die Zugriffsinformationen mehrmals hintereinander ausgewertet werden. Dabei kann vorgesehen werden, dass ein Zugriff auf die Dateneinheit nur dann gewährt wird, wenn jede einzelne Auswertung der Zugriffsinformationen ein positives Ergebnis liefert. Mit dieser Vorgehensweise lassen sich insbesondere Angriffe abwehren, die auf eine Manipulation des Auswerteprozesses abzielen, da eine mehrmalige erfolgreiche Manipulation wesentlich schwieriger zu erzielen ist als eine einmalige.

In einer Abwandlung des erfindungsgemäßen Verfahrens werden vor der Gewährung eines Zugriffs oder während des Zugriffs auf die Dateneinheit die Parameter des Zugriffs mehrmals geprüft. Dies hat den Vorteil, dass Manipulationsversuche ermittelt werden können, bei denen versucht wird, die Parameter des Zugriffs zu ändern.

Das erfindungsgemäße Verfahren kann auch so ausgebildet werden, dass sicherheitsrelevante Vergleiche mehrfach durchgeführt werden. Dadurch können Manipulationsversuche generell bei derartigen Vergleichen erheblich erschwert werden.

Besonders vorteilhaft ist es, wenn für wenigstens eine sicherheitsrelevante Operation der Zeitpunkt der Durchführung zufällig gewählt wird. Auf diese Weise können mit sehr einfachen Mitteln Manipulationsversuche abgewehrt werden, da es dem Angreifer erheblich erschwert wird, seinen Angriff zum richtigen Zeitpunkt zu starten. Dieses Vorgehen kann insbesondere bei den vorstehend erwähnten Auswertungen der Zugriffsinformationen, Prüfungen der Parameter des Zugriffs und sicherheitsrelevanten Vergleichen angewendet werden.

Weiterhin lässt sich die Sicherheit beim Betrieb des tragbaren Datenträgers dadurch erhöhen, dass alle geheimen Daten nach deren Gebrauch in einem Arbeitsspeicher des tragbaren Datenträgers, welcher der temporären Zwischenspeicherung von Daten dient, gelöscht werden.

Der erfindungsgemäße tragbare Datenträger weist einen Speicher auf, in dem wenigstens eine Dateneinheit und Zugriffsinformationen, die den Zugriff auf die Dateneinheit regeln, abgelegt sind. Weiterhin ist eine Sicherheitsfunktion vorgesehen, von der nur Zugriffe auf die Dateneinheit zugelassen werden, die mit den Zugriffsinformationen für diese Dateneinheit verträglich sind. Die Besonderheit des erfindungsgemäßen tragbaren Datenträgers besteht darin, dass von der Sicherheitsfunktion bei einem Zugriff auf die Dateneinheit geprüft wird, ob die Zugriffsinformationen für diese Dateneinheit manipuliert wurden.

Der tragbare Datenträger kann insbesondere einen Permanentspeicher aufweisen, dessen unbenutzte Bereiche mit Befehlen aufgefüllt sind, bei deren Ausführung keine Aktionen durchgeführt werden. Am Ende der unbenutzten Bereiche kann jeweils ein Sprungbefehl gespeichert sein. Dabei kann die Sprungadresse des Sprungbefehls innerhalb des jeweiligen unbenutzten Bereichs liegen. Ebenso ist es auch möglich, dass die Sprungadresse des Sprungbefehls auf eine Routine weist, die zu schützende Daten aus dem Speicher löscht. Nach dem Löschen kann die Routine in einer Endlosschleife verharren. Durch diese Maßnahmen können schädliche Auswirkungen von undefinierten Sprüngen im Permanentspeicher verhindert werden, die beispielsweise durch äußere Störungen ausgelöst werden können.

Die Erfindung wird nachstehend anhand der in der Zeichnung dargestellten Ausführungsbeispiele erläutert.

Es zeigen:
- Fig. 1: ein stark vereinfachtes Blockschaltbild für ein Ausführungsbeispiel eines tragbaren Datenträgers,
- Fig. 2: ein Ausführungsbeispiel für den Aufbau einer im Speicher des tragbaren Datenträgers abgelegten Datei und
- Fig. 3: ein Flussdiagramm für eine mögliche Variante eines erfindungsgemäßen Ablaufs eines Lesezugriffs auf die Datei.

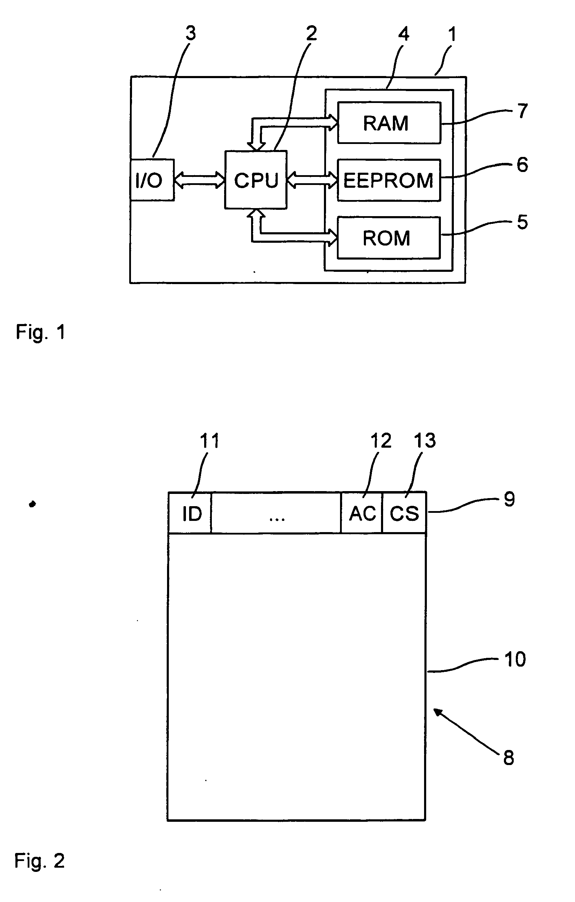

Fig. 1 zeigt ein stark vereinfachtes Blockschaltbild für ein Ausführungsbeispiel eines tragbaren Datenträgers 1, bei dem das erfindungsgemäße Verfahren angewendet werden kann. Bei dem tragbaren Datenträger 1 kann es sich beispielsweise um eine Chipkarte handeln. Der tragbare Datenträger 1 weist eine Steuereinheit 2 auf, die die Funktionsabläufe des tragbaren Datenträgers 1 steuert. Weiterhin weist der tragbare Datenträger 1 eine Ein-/ Ausgabeeinheit 3 und einen Speicher 4 auf. Beim dargestellten Ausführungsbeispiel besteht der Speicher 4 aus einem Permanentspeicher 5, einem nichtflüchtigen Speicher 6 und einem flüchtigen Speicher 7. Alternativ dazu ist auch ein anderer Aufbau des Speichers 4 möglich. Die Steuereinheit 2 ist mit der Ein-/ Ausgabeeinheit 3, dem Permanentspeicher 5, dem nichtflüchtigen Speicher 6 und dem flüchtigen Speicher 7 verbunden. Die Ein-/ Ausgabeeinheit 3 dient der Kommunikation mit externen Geräten, die durch eine berührende Kontaktierung des tragbaren Datenträgers 1 und/ oder kontaktlos abgewickelt werden kann.

Im Permanentspeicher 5 sind Daten abgelegt, die während der gesamten Lebensdauer des tragbaren Datenträgers 1 unverändert erhalten bleiben. Dabei wird der Begriff Daten im Folgenden sehr allgemein im Sinne beliebiger Informationen unabhängig von deren Inhalt verwendet und es werden darunter beispielsweise Programme, Parameter, personenbezogene Angaben, Schlüssel usw. subsumiert. Insbesondere ist im Permanentspeicher 5 das Betriebssystem des tragbaren Datenträgers 1 gespeichert. Dabei sind sämtliche unbenutzten Bereiche des Permanentspeichers 5 mit Kommandos aufgefüllt, die keine Aktionen zur Folge haben. Am Ende der unbenutzten Bereiche des Permanentspeichers 5 ist jeweils ein Sprungbefehl abgelegt, dessen Sprungadresse im jeweiligen unbenutzten Bereich des Permanentspeichers 5 liegt. Alternativ dazu kann die Sprungadresse des Sprungbefehls auf eine Routine weisen, die zu schützende Daten aus dem Speicher 4 löscht. Nach dem Löschen kann die Routine in einer Endlosschleife verharren. Durch diese Maßnahmen können Fehlfunktionen durch undefinierte Sprünge des Programmzählers, die von äußeren Störeinflüssen hervorgerufen werden können, vermieden werden. Undefinierte Sprünge des Programmzählers bergen beispielsweise das Risiko, dass eine Ausgabe des Inhalts des flüchtigen Speichers 7 zu einem Zeitpunkt veranlasst wird, zu dem dort geheime Daten abgelegt sind.

Der flüchtige Speicher 7 dient als Arbeitsspeicher für die Steuereinheit 2, so dass geheime Daten beispielsweise bei der Durchführung von Berechnungen im flüchtigen Speicher 7 zwischengespeichert werden. Im flüchtigen Speicher 7 bleibt der Speicherinhalt zwar nur solange erhalten, wie der tragbare Datenträger 1 mit einer Betriebspannung versorgt wird. Dennoch sollte die Verweildauer geheimer Daten im flüchtigen Speicher 7 möglichst kurz gehalten werden, indem diese Daten im flüchtigen Speicher 7 jeweils unmittelbar nach Gebrauch gelöscht werden. Dadurch kann das mit undefinierten Sprüngen verbundene Risiko noch weiter reduziert werden.

Der nichtflüchtige Speicher 6 kann während der Lebensdauer des tragbaren Datenträgers 1 immer wieder neu beschrieben werden. Der jeweilige Speicherinhalt bleibt auch dann erhalten, wenn der tragbare Datenträger 1 nicht mit der Betriebsspannung versorgt wird. Im nichtflüchtigen Speicher 6 sind beispielsweise Ergänzungen zum Betriebssystem, Anwendungssoftware, Schlüssel, personenbezogene Daten usw. abgelegt.

Mit dem erfindungsgemäßen Verfahren sollen unberechtigte Zugriffe auf die im Speicher 4 des tragbaren Datenträgers 1 abgelegten Daten verhindert werden. Die Daten sind jeweils in Dateien abgelegt, deren Aufbau im Folgenden anhand von Fig. 2 näher erläutert wird.

Fig. 2 zeigt ein Ausführungsbeispiel für den Aufbau einer im Speicher 4 des tragbaren Datenträgers 1 abgelegten Datei 8. Die Datei 8 besteht aus einem Dateikopf 9 und einem Dateirumpf 10. Im Dateirumpf 10 sind die Nutzdaten der Datei 8 abgelegt. Der Dateikopf 9 weist eine Reihe von Feldern auf, in denen Informationen zur Datei 8 eingetragen sind. So ist beispielsweise in einem Feld 11 ein Dateiname eingetragen, um die Datei 8 identifizieren zu können. Weiterhin sind in einem Feld 12 Zugriffsbedingungen eingetragen, die den Zugriff auf die Datei 8 regeln. Über die Zugriffsbedingungen soll sichergestellt werden, dass nur berechtigte Zugriffe auf die Nutzdaten des Dateirumpfes 10 erfolgen. Hierzu wird jeweils anhand der Zugriffsbedingungen ausgewertet, ob ein beabsichtigter Zugriff berechtigt ist. Nur wenn bei der Auswertung das Vorliegen einer Berechtigung festgestellt wird, wird der Zugriff zugelassen. Auf diese Weise kann beispielsweise ein lesender Zugriff auf die Nutzdaten des Dateirumpfes 10 auf solche Dateien 8 beschränkt werden, die keine geheimen Daten enthalten und dadurch ein Ausspähen der geheimen Daten verhindert werden. Dies ist allerdings nur beim Normalbetrieb des tragbaren Datenträgers 1 sichergestellt.

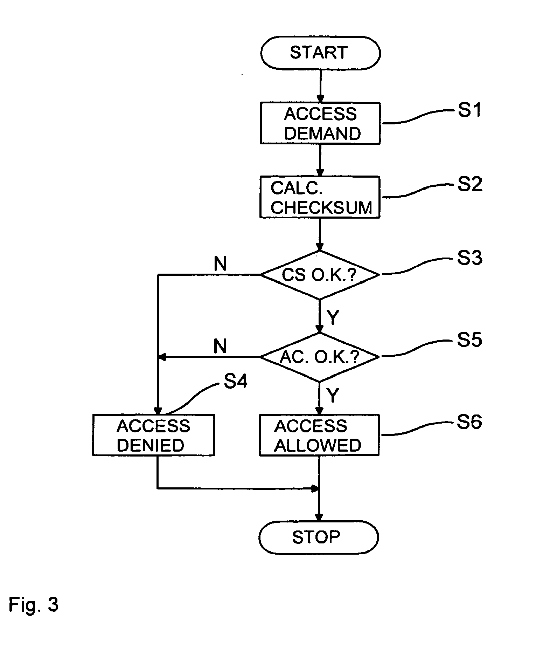

Wenn Störmaßnahmen, wie beispielsweise eine intensiven Bestrahlung mit Licht oder ein kurzzeitiges Absenken oder Anheben der Betriebsspannung oder andere Störungen, dazu führen, dass die Zugriffsbedingungen geändert werden oder die Prüfung der Zugriffsbedingungen manipuliert wird, dann besteht das Risiko, dass geheime Daten des Dateirumpfes 10 ohne Berechtigung gelesen werden und möglicherweise missbräuchlich verwendet werden. Um das zu verhindern ist im Rahmen der Erfindung ein Feld 13 im Dateikopf 9 vorgesehen, in das eine Prüfsumme über die Zugriffsbedingungen und die Nutzdaten des Dateirumpfes 10 eingetragen ist. Mit Hilfe dieser Prüfsumme kann ermittelt werden, ob die für einen Zugriff auf die Nutzdaten des Dateirumpfes 10 zu prüfenden Zugriffsbedingungen tatsächlich in der aktuell vorliegenden Weise für diese Nutzdaten vorgegeben wurden oder eine Manipulation vorgenommen wurde. Wie dies im Einzelnen geschieht, wird anhand von Fig. 3 erläutert.

Fig. 3 zeigt ein Flussdiagramm für eine mögliche Variante eines erfindungsgemäßen Ablaufs eines Lesezugriffs auf die Datei 8. Die beschriebene Vorgehensweise ist entsprechend auch bei anderen Zugriffsarten, wie beispielsweise einem Schreibzugriff usw., anwendbar. Der Durchlauf des Flussdiagramms beginnt mit einem Schritt S1, in dem ein lesender Zugriff auf die Datei 8 angefordert wird. An Schritt S1 schließt sich ein Schritt S2 an, in dem ein aktueller Wert für die Prüfsumme über die Zugriffsbedingungen und die Nutzdaten der Datei 8 ermittelt wird. Auf Schritt S2 folgt ein Schritt S3, in dem abgefragt wird, ob der aktuelle Wert für die Prüfsumme mit einem Wert übereinstimmt, der im Feld 13 im Dateikopf 9 der Datei 8 eingetragen ist. Der Wert im Feld 13 wurde beim Anlegen der Datei 8 bzw. bei einer autorisierten Änderung der Datei 8 ermittelt und in den Dateikopf 9 eingetragen. Wird im Schritt S3 festgestellt, dass keine Übereinstimmung zwischen dem aktuellen Wert und dem im Feld 13 des Dateikopfes 9 eingetragenen Wert für die Prüfsumme vorliegt, so haben sich seit dem Eintrag des Werts für die Prüfsumme in das Feld 13 des Dateikopfes 9 die Nutzdaten des Dateirumpfes 10 und / oder die Zugriffsbedingungen geändert. Dies bedeutet, dass für die aktuellen Nutzdaten des Dateirumpfes 10 keine gültigen Zugriffsbedingungen vorliegen. Da somit die Gefahr besteht, dass die Zugriffsbedingungen manipuliert wurden, schließt sich in diesem Fall an Schritt S3 ein Schritt S4 an, in dem ein Zugriff auf die Datei 8 verweigert wird und ggf. weitere Maßnahmen zum Schutz des tragbaren Datenträgers 1 eingeleitet werden. Damit ist der Durchlauf des Flussdiagramms beendet.

Wird im Schritt S3 dagegen eine Übereinstimmung zwischen dem aktuellen Wert und dem im Feld 13 des Dateikopfes 9 eingetragenen Wert der Prüfsumme festgestellt, so folgt auf Schritt S3 ein Schritt S5. Im Schritt S5 werden die Zugriffsbedingungen ausgewertet, um zu prüfen, ob es sich um einen berechtigten Zugriffsversuch handelt. Ergibt die Prüfung, dass kein berechtigter Zugriffsversuch vorliegt, so wird anschließend an Schritt S5 der Schritt S4 ausgeführt und der Durchlauf des Flussdiagramms ist beendet. Bei einer Abwandlung des erfindungsgemäßen Verfahrens könnte auch ein eigens für diesen Fall vorgesehener Schritt ausgeführt werden, bei dem entsprechend Schritt S4 der Zugriff auf die Datei 8 verweigert wird, aber andere Schutzmaßnahmen als bei Schritt S4 ausgeführt werden. Ergibt die Prüfung des Schrittes S5 dagegen, dass der Zugriffsversuch berechtigt ist, so schließt sich ein Schritt S6 an, in dem ein Zugriff auf die Datei 8 gewährt wird. Für das vorliegende Ausführungsbeispiel bedeutet dies, dass die im Dateirumpf 10 abgelegten Nutzdaten gelesen werden. Mit Schritt S6 ist der Durchlauf des Flussdiagramms beendet.

Um die Berechnung der Prüfsumme zu erleichtern, kann auch vorgesehen werden, die Prüfsumme lediglich über den Dateikopf 9 zu bilden. In diesem Fall ist es allerdings erforderlich, dass im Dateikopf 9 Größen abgelegt sind, welche die Datei 8 charakterisieren, damit sich eine Änderung der Datei 8 auf den Dateikopf 9 und damit auch auf die Prüfsumme auswirkt.

Die vorstehend beschriebene Vorgehensweise stellt einen wirksamen Schutz gegen einen unerlaubten Zugriff bei einer Manipulation der im Feld 13 im Dateikopf 9 der Datei 8 abgelegten Zugriffsbedingungen dar. Allerdings könnte ein Manipulationsversuch auch auf die Durchführung der Auswertung der Zugriffsbedingungen abzielen. Diese Auswertung könnte so gestört werden, dass ein Zugriff gewährt wird, obwohl eine korrekte Auswertung der Zugriffsbedingungen eine Verweigerung des Zugriffs zur Folge gehabt hätte. Ein derartiger Angriff kann durch die Einbeziehung der Prüfsumme nicht verhindert werden, da bei diesem Angriff keine Manipulation an den Zugriffsbedingungen erforderlich ist. Dennoch kann dieser Angriff mit relativ einfachen Mitteln erheblich erschwert werden. Hierzu ist es lediglich erforderlich, die Auswertung der Zugriffsbedingungen wenigstens einmal zu wiederholen. Die Wahrscheinlichkeit, dass ein zweiter Manipulationsversuch exakt zum Zeitpunkt der Wiederholung der Auswertung erfolgreich durchgeführt wird, ist sehr gering. Die Erfolgsaussichten eines Angriffs lassen sich noch weiter reduzieren, wenn die Wiederholung nicht zu einem festen Zeitpunkt nach der vorherigen Auswertung durchgeführt wird, sondern dieser Zeitpunkt zufällig gewählt wird. Auch der Zeitpunkt der ersten Auswertung kann zufällig gewählt werden. Wichtig ist dabei jeweils, dass sich der Programmablauf bei jeder einzelnen Auswertung verzweigt und das Programm nur dann bei einer Gewährung des Zugriffs angelangt, wenn alle Auswertungen tatsächlich positiv absolviert wurden. Um sowohl einen Schutz vor einer Manipulation der Zugriffsbedingungen als auch vor einer Manipulation der Durchführung der Auswertung dieser Zugriffsbedingungen zu erzielen, können die Einbeziehung der Prüfsumme und die mehrmalige Durchführung der Auswertung miteinander kombiniert werden.

Ein weiterer Manipulationsversuch könnte darauf abzielen, die Parameter eines berechtigten Lesezugriffs so zu manipulieren, dass Daten außerhalb der selektierten Datei 8 gelesen werden. Insbesondere könnten die Offset- oder Längenwerte der Lesekommandos manipuliert werden. Auch hier besteht eine erfolgreiche Gegenmaßnahme darin, die jeweiligen Parameter mehrmals zu prüfen und/ oder den Zeitpunkt der Prüfung jeweils zufällig zu wählen.

Die mehrmalige Prüfung und/ oder die Durchführung zu einem zufällig gewählten Zeitpunkt können auch bei sicherheitsrelevanten Vergleichen wie beispielsweise der Prüfung einer Geheimzahl oder bei anderen sicherheitsrelevanten Operationen angewendet werden.

Als eine weitere Maßnahme zur Erhöhung der Sicherheit des tragbaren Datenträgers 1 sind zur Abwehr von Timing Attacken alle Berechnungen, bei denen geheime Daten verwendet werden, so zu programmieren, dass die Berechnungszeit keine Informationen über die geheimen Daten liefert. Außerdem sind für die Berechnung z. B. von Prüfsummen keine Bit-orientierten Verfahren, sondern Verfahren auf Basis eines oder mehrerer Bytes, wie beispielsweise Reed-Solomon Codes oder Hamming Codes usw. zu verwenden.

## Patentansprüche

1. Verfahren zum sicheren Betrieb eines tragbaren Datenträgers (1), der einen Speicher (4) aufweist, in dem wenigstens eine Dateneinheit (8) und Informationen, die den Zugriff auf die Dateneinheit (8) regeln, abgelegt sind, wobei nur Zugriffe auf die Dateneinheit (8) zugelassen werden, die mit den Zugriffsinformationen für diese Dateneinheit (8) verträglich sind, wobei vor der Gewährung eines Zugriffs auf die Dateneinheit (8) jeweils geprüft wird, ob die Zugriffsinformationen und/oder die Verarbeitung der Zugriffsinformationen für diese Dateneinheit (8) manipuliert wurden, wobei beim Anlegen der Dateneinheit (8) ein Prüfwert hinterlegt wird, **dadurch gekennzeichnet, dass** der Prüfwert von den Zugriffsinformationen und von einer die Dateneinheit (8) charakterisierende Größe und/ oder vom Inhalt der Dateneinheit (8) abhängt.

2. Verfahren nach Anspruch 1, **dadurch gekennzeichnet, dass** der Prüfwert eine Prüfsumme darstellt.

3. Verfahren nach einem der Ansprüche 1 bis 2, **dadurch gekennzeichnet, dass** vor der Gewährung eines Zugriffs auf die Dateneinheit (8) jeweils ein neuer Prüfwert gebildet wird und mit dem hinterlegten Prüfwert verglichen wird.

4. Verfahren nach Anspruch 3, **dadurch gekennzeichnet, dass** ein Zugriff auf die Dateneinheit (8) nur dann gewährt wird, wenn der neue Prüfwert und der hinterlegte Prüfwert übereinstimmen.

5. Verfahren nach einem der vorhergehenden Ansprüche, **dadurch gekennzeichnet, dass** vor der Gewährung eines Zugriffs auf die Dateneinheit (8) die Zugriffsinformationen mehrmals hintereinander ausgewertet werden.

6. Verfahren nach Anspruch 5, **dadurch gekennzeichnet, dass** ein Zugriff auf die Dateneinheit (8) nur dann gewährt wird, wenn jede einzelne Auswertung der Zugriffsinformationen ein positives Ergebnis liefert.

7. Verfahren nach einem der vorhergehenden Ansprüche, **dadurch gekennzeichnet, dass** vor der Gewährung eines Zugriffs oder während des Zugriffs auf die Dateneinheit (8) die Parameter des Zugriffs mehrmals geprüft werden.

8. Verfahren nach einem der vorhergehenden Ansprüche, **dadurch gekennzeichnet, dass** sicherheitsrelevante Vergleiche mehrfach durchgeführt werden.

9. Verfahren nach einem der vorhergehenden Ansprüche, **dadurch gekennzeichnet, dass** für wenigstens eine sicherheitsrelevante Operation der Zeitpunkt der Durchführung zufällig gewählt wird.

10. Verfahren nach einem der vorhergehenden Ansprüche, **dadurch gekennzeichnet, dass** der tragbare Datenträger (1) einen Arbeitsspeicher (7) zur temporären Zwischenspeicherung von Daten aufweist und alle geheimen Daten nach deren Gebrauch im Arbeitsspeicher (7) gelöscht werden.

11. Tragbarer Datenträger für das Ausführen des Verfahrens nach Anspruch 1 mit einem Speicher (4), in dem wenigstens eine Dateneinheit (8) und Zugriffsinformationen, die den Zugriff auf die Dateneinheit (8) regeln, abgelegt sind, wobei eine Sicherheitsfunktion vorgesehen ist, von der nur Zugriffe auf die Dateneinheit (8) zugelassen werden, die mit den Zugriffsinformationen für diese Dateneinheit (8) verträglich sind, wobei von der Sicherheitsfunktion vor der Gewährung eines Zugriffs auf die Dateneinheit (8) jeweils geprüft wird, ob die Zugriffsinformationen und/oder die Verarbeitung der Zugriffsinformationen für diese Dateneinheit (8) manipuliert wurden, wobei von der Sicherheitsfunktion beim Anlegen der Dateneinheit (8) ein Prüfwert hinterlegt wird, **dadurch gekennzeichnet, daß** die Sicherheitsfunktion die Abhängigkeit des Prüfwertes von den Zugriffsinformationen und von einer die Dateneinheit (8) charakterisierenden Größe prüft.

12. Tragbarer Datenträger nach Anspruch 11, **dadurch gekennzeichnet, dass** ein Permanentspeicher (5) vorgesehen ist und alle unbenutzten Bereiche des Permanentspeichers (5) mit Befehlen aufgefüllt sind, bei deren Ausführung keine Aktionen durchgeführt werden, und am Ende der unbenutzten Bereiche jeweils ein Sprungbefehl gespeichert ist.

13. Tragbarer Datenträger nach Anspruch 12, **dadurch gekennzeichnet, dass** die Sprungadresse des Sprungbefehls innerhalb des jeweiligen unbenutzten Bereichs liegt.

14. Tragbarer Datenträger nach Anspruch 12, **dadurch gekennzeichnet, dass** die Sprungadresse des Sprungbefehls auf eine Routine weist, die zu schützende Daten aus dem Speicher (4) löscht.

15. Tragbarer Datenträger nach Anspruch 14, **dadurch gekennzeichnet, dass** die Routine nach dem Löschen in einer Endlosschleife verharrt.

## Claims

1. A method for secure operation of a portable data carrier (1) which has a memory (4) in which there are stored at least one data unit (8) and information which regulate the access to the data unit (8), wherein only accesses to the data unit (8) are permitted that are compatible with the access information for said data unit (8), wherein before the granting of an access to the data unit (8) it is checked in each case whether the access information and/or the processing of the access information for said data unit (8) have been tampered with, wherein a check value is deposited upon creation of the data unit (8), **characterized in that** the check value depends on the access information and on a quantity characterizing the data unit (8) and/or on the content of the data unit (8).

2. The method according to claim 1, **characterized in that** the check value is a check sum.

3. The method according to either of claims 1 to 2, **characterized in that** before the granting of an access to the data unit (8), a new check value is in each case formed and compared to the deposited check value.

4. The method according to claim 3, **characterized in that** an access to the data unit (8) is granted only when the new check value matches the deposited check value.

5. The method according to any of the preceding claims, **characterized in that** before the granting of an access to the data unit (8) the access information is evaluated several times consecutively.

6. The method according to claim 5, **characterized in that** an access to the data unit (8) is granted only when each individual evaluation of the access information delivers a positive result.

7. The method according to any of the preceding claims, **characterized in that** before the granting of an access or during the access to the data unit (8) the parameters of the access are checked several times.

8. The method according to any of the preceding claims, **characterized in that** security-relevant comparisons are carried out several times.

9. The method according to any of the preceding claims, **characterized in that** for at least one security-relevant operation the time when it is carried out is chosen randomly.

10. The method according to any of the preceding claims, **characterized in that** the portable data carrier (1) has a working memory (7) for temporary intermediate storage of data, and all secret data are erased after their use in the working memory (7).

11. A portable data carrier for executing the method according to claim 1 having a memory (4) in which there are stored at least one data unit (8) and access information which regulate the access to the data unit (8), wherein a security function is provided by which only accesses to the data unit (8) are permitted that are compatible with the access information for said data unit (8), wherein it is checked in each case by the security function before the granting of an access to the data unit (8) whether the access information and/or the processing of the access information for said data unit (8) have been tampered with, wherein a check value is deposited by the security function upon creation of the data unit (8), **characterized in that** the security function checks the dependence of the check value on the access information and on a quantity characterizing the data unit (8).

12. The portable data carrier according to claim 11, **characterized in that** a permanent memory (5) is provided, and all unused areas of the permanent memory (5) are filled with instructions upon whose execution no actions are carried out, and a jump instruction is stored in each case at the end of the unused areas.

13. The portable data carrier according to claim 12, **characterized in that** the jump address of the jump instruction is located within the particular unused area.

14. The portable data carrier according to claim 12, **characterized in that** the jump address of the jump instruction points to a routine which erases from the memory (4) the data to be protected.

15. The portable data carrier according to claim 14, **characterized in that** the routine remains in an endless loop after erasure.

## Revendications

1. Procédé d'exploitation fiable d'un support de données portable (1) qui comporte une mémoire (4) dans laquelle sont stockées au moins une unité de données (8) et des informations qui règlent l'accès à l'unité de données (8), uniquement des accès à l'unité de données (8) qui sont compatibles avec les informations d'accès pour cette unité de données (8) étant admis, il étant respectivement vérifié avant l'octroi d'un accès à l'unité de données (8) si les informations d'accès et/ou le traitement des informations d'accès pour cette unité de données (8) ont été manipulés, une valeur de contrôle étant consignée lors de la création de l'unité de données (8), **caractérisé en ce que** la valeur de contrôle dépend des informations d'accès et d'une grandeur caractérisant l'unité de données (8) et/ou du contenu de l'unité de données (8).

2. Procédé selon la revendication 1, **caractérisé en ce que** la valeur de contrôle représente une somme de contrôle.

3. Procédé selon une des revendications 1 ou 2, **caractérisé en ce qu'**une nouvelle valeur de contrôle est respectivement constituée avant l'octroi d'un accès à l'unité de données (8) et comparée avec la valeur de contrôle consignée.

4. Procédé selon la revendication 3, **caractérisé en ce qu'**un accès à l'unité de données (8) n'est octroyé que quand la nouvelle valeur de contrôle et la valeur de contrôle consignée coïncident.

5. Procédé selon une des revendications précédentes, **caractérisé en ce que** les informations d'accès sont évaluées plusieurs fois à la suite avant l'octroi d'un accès à l'unité de données (8).

6. Procédé selon la revendication 5, **caractérisé en ce qu'**un accès à l'unité de données (8) n'est octroyé que quand chacune des évaluations des informations d'accès apporte un résultat positif.

7. Procédé selon une des revendications précédentes, **caractérisé en ce que** les paramètres de l'accès sont contrôlés plusieurs fois avant l'octroi d'un accès ou pendant l'accès à l'unité de données (8).

8. Procédé selon une des revendications précédentes, **caractérisé en ce que** des comparaisons touchant à la sécurité sont exécutées plusieurs fois.

9. Procédé selon une des revendications précédentes, **caractérisé en ce que** le moment de l'exécution est choisi aléatoirement pour au moins une opération touchant à la sécurité.

10. Procédé selon une des revendications précédentes, **caractérisé en ce que** le support de données portable (1) comporte une mémoire de travail (7) pour le stockage intermédiaire temporaire de données et **en ce que** toutes les données secrètes sont effacées après leur utilisation dans la mémoire de travail (7).

11. Support de données portable pour l'exécution du procédé selon la revendication 1 comprenant une mémoire (4) dans laquelle au moins une unité de données (8) et des informations d'accès qui règlent l'accès à l'unité de données (8) sont stockées, une fonction de sécurité étant prévue, par laquelle seuls des accès à l'unité de données (8) compatibles avec les informations d'accès pour cette unité de données (8) sont admis, il étant respectivement examiné par la fonction de sécurité avant l'octroi d'un accès à l'unité de données (8) si les informations d'accès et/ou le traitement des informations d'accès pour cette unité de données (8) ont été manipulés, une valeur de contrôle étant consignée par la fonction de sécurité lors de la création de l'unité de données (8), **caractérisé en ce que** la fonction de sécurité examine la dépendance de la valeur de contrôle des informations d'accès et d'une grandeur caractérisant l'unité de données (8).

12. Support de données portable selon la revendication 11, **caractérisé en ce qu'**une mémoire rémanente (5) est prévue, **en ce que** toutes les zones non utilisées de la mémoire rémanente (5) sont remplies de commandes lors de l'exécution desquelles il n'est pas effectué d'actions, et **en ce qu'**une instruction de saut est respectivement mémorisée au bout des zones non utilisées.

13. Support de données portable selon la revendication 12, **caractérisé en ce que** l'adresse de saut de l'instruction de saut se trouve à l'intérieur de la zone respectivement non utilisée.

14. Support de données portable selon la revendication 12, **caractérisé en ce que** l'adresse de saut de l'instruction de saut indique une routine qui efface de la mémoire (4) des données à protéger.

15. Support de données portable selon la revendication 14, **caractérisé en ce que**, après l'effacement, la routine demeure dans une boucle sans fin.
